# EUROPEAN PATENT SPECIFICATION

(11) **EP 1 060 984 B1**
(45) Date of publication and mention of the grant of the patent: **17.11.2004**
(21) Application number: 00500073.2
(22) Date of filing: 19.04.2000
(51) Int. Cl.: B64C 3/50, B64C 9/24

(54) **Automatic leading edge flap**
Automatische Vorderkantenklappe
Volet de bord d'attaque automatique

(30) Priority: 26.04.1999 ES 9900857
(43) Date of publication of application: 20.12.2000
(73) Proprietor: Munoz Saiz, Manuel, 04004 Almeria (ES)
(72) Inventor: Munoz Saiz, Manuel, 04004 Almeria (ES)

(56) References cited:
- US-A- 1 830 019
- US-A- 4 422 606
- US-A- 5 895 015

## Description

### BACKGROUND OF THE INVENTION

Field of the Invention: The invention includes a device that is an aircraft leading edge flap of high-lift action for low-speed flight.

### Description of the Prior Art

At present, flaps are manually operated and controlled by complex, duplicated, and heavy devices. When the flaps are automatic, they need a big force or big springs for the actuation. The document US 183019 shows an automatic leading edge flap according to the preamble of claim 1.

### SUMMARY OF THE INVENTION

The automatic leading edge flap of this invention comprises fins located on the upper front zone of the wing and forming part of said wing. A rotating shaft fastens each fin to the fuselage or to the wing and divides each fin into two pieces, one forward or smaller and another rearward or larger. The fin can be fastened and divided by a rotating shaft in a common eccentric zone. Alternately, the fin can be fastened and divided by a rotating shaft in two pieces of different surface. The eccentricity of the shaft relative to the center of the fin determines how easily the flap rotates under air ram pressure: the more eccentric, the more that the fin stay extended at low speed.

The shaft can be parallel to the line of the leading edge of the wing, Alternately, the shaft can be parallel to the transverse axis of the aircraft.

The pieces of the fin have different resistance to the air ram. The different resistance creates a rotation torque whose magnitude is a function of the aircraft's speed.

When retracted (at high speed) the flap or fin adapts or fit to the wing and create an aerodynamic profile.

When the flap is completely extended (a maximum negative leading angle), a slot is created between the fin and the wing that prevents loss of the boundary layer and air current on the extrados, having the piece of wing immediately behind the fin, a leading edge with and acute angle that cuts the air ram parallely.

Straitening means such as extend bands or springs can be added to assist and complement the action of the smaller portion of the fin whose resistance is such that, at low speed, the flap remains extended.

A common shaft can be used between the flaps of both wings. Alternatively, a universal joint can link two fins when they are not in a straight line.

The interconnection can be made by two or more shaft sectors linked by a universal joint.

Both flaps can be joined by a flexible shaft.

A plurality of springs and band springs can be added to increase the flaps tendency to extend.

The springs or band straps create resistance which opposes the movement of the fins caused by the increasing aircraft speed.

Rotation end stops hold the fins at their position of furthest retraction: the most nearly horizontal that occurs at high speed, additionally, other rotation end stops are used at their position of furthest extension.

An actuator means such as the following types can hold flap in its position of greatest retraction: electromagnetic, pneumatic, or hydraulic.These actuators can also drive the flap.

An anti-gust ram prevents large oscilations.

Each wing can have a plurality of fins interconnected by a shaft and their corresponding support brackets to the fuselage.

One variant has the fins below and in front of the wing, when retracted (at high speed) the flap acts as an independent and parallel wing that is formed below and in front of the wing. When the flap is completely extended (a maximum negative angle of attack), the fin, the wing and the leading edge flap create an aerodynamic profile.

### Objects of this invention:

The device needs no controls, actuators, articulations in some cases, asymmetry protection or its alternative systems, and more maintenance, the eccentrity of the shaft is small, enabling the flap to operate under very little force and use very small springs. Because the rotational axis is close to the central zone making the eccentrity small, the flap can move with very little force so only very small springs are required. The operation is not hazardous. The device works specially well in large aircraft.

### BRIEF DESCRIPTION OF THE DRAWINGS

Figure 1 shows a schematic, cross-sectional view of a wing with the leading edge flap in the invention.

Figure 2 shows a schematic, cross-sectional view of a wing with one variant of a leading edge flap.

Figure 3 shows a schematic, bottom view of a portion of the aircraft with the flap in the invention.

### DETAILEDDESCRIPTION OF THE PREFERRED EMBODYMENTS

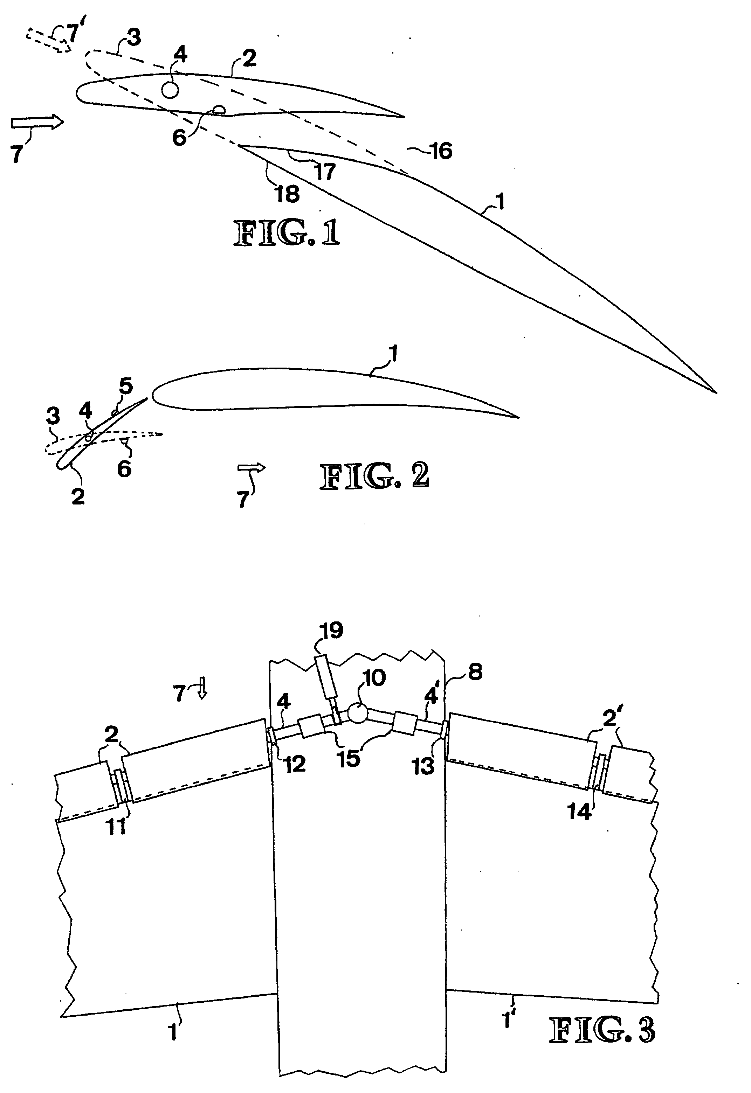

Figure 1 depicts wing1 and extended fin 2. When fin 3 is completely retracted, the flap and the wing create an aerodynamic profile. The dotted area shows the retracted fin 3 and its rotating shaft 4. Shaft 4 divides fin 2 into front and rear piece. The rotation end stop is 6. The oncoming air ram is indicated on the drawing by an arrow 7. The direction of the air with very small leading angle is 7'. The slot 16. Where 17 and 18 are the surfaces or plates that form an diedral angle in the front zone immediately behind the fin. This figure does not show the fuselage.

Figure 2 depicts wing1 and extended fin 2, and retracted fin 3. When fin 2 is completely extended with a maximum negative leading angle, the flap and the wing create an aerodynamic profile. The dotted area shows the retracted fin 3 and its rotating shaft 4. Shaft 4 divides fin 2 into front and rear piece. The rotation end stops are 5 and 6. The direction of the air is 7.

Figure 3 depitcts wing 1 and 1', fins 2 and 2'which are interconnected by common shafts 4 and 4'. Shafts 4 divide fin 2 into front piece and rear piece. Air ram 7 is indicated with an arrow. The fuselage 8, the universal joint 10 and the brackets 11, 12, 13 and 14 of the shafts 4 and 4' and the extended springs 15. The actuator or anti-gust ram 19.

Several fins of the same type used in figure 1 can be used, from the leading edge to the trailing edge, in such a way that one leans or rests on the following o next fin.

## Claims

1. An automatic leading edge flap that comprises at least one flap (2) for being located on the upper front zone of the wing (1) and for forming part of said wing, a rotating shaft (4) for fastening said at least one flap to the fuselage or to the wing and means (15) that assists said flap in extending at low speed, **characterized in that** said shaft divides said at least one flap into two portions, one smaller portion forward of said shaft and a larger portion rearward of said shaft wherein said front portion and rear portion have different resistance to the air ram, torquing said flap about said shaft towards the horizontal

2. An automatic leading edge flap according to claim 1, wherein said shaft is parallel to said transversal axis of the aircraft, or to the leading edge of the wing.

3. An automatic leading edge flap according to claim 1, wherein said assisting means are extended bands.

4. An automatic leading edge flap according to claim 1, wherein said assisting means are springs.

5. An automatic leading edge flap according to claim 1, further comprising a second flap for being symmetrically arranged on an opposing wing.

6. An automatic leading edge flap according to claim 5, further comprising an universal joint connecting the shafts of said opposing flaps.

7. An automatic leading edge flap according to claim 5, wherein each wing have a plurality of flaps interconnected by a shaft and their corresponding support brackets to the fuselage.

8. An automatic leading edge flap according to claim 1, further comprising rotation end stops that hold the flaps at their position of further retraction and extension.

9. An automatic leading edge flap according to claim 1, further comprising an actuator means that can rotate said flap and hold said flap in its position of greatest retraction.

10. An automatic leading edge flap according to claim 1, further comprising an anti-gust ram that prevents large oscillation.

11. An automatic leading edge flap according to claim 1, wherein the flaps are located below, in front and extended forward beyond a wing.

## Patentansprüche

1. Automatischer Vorderkantenklappe, die mindestens eine auf dem oberen frontalen Bereich des Flügels (1) angeordnete Klappe (2) und, da sie Bestandteil des Flügels ist, eine Drehachse (4) zur Befestigung der mindestens einen Klappe am Rumpf oder am Flügel umfasst, zu welchem Zweck Mittel (15) in zwei Teilen, einem kleinen Teil vor der Achse und einem grösseren Teil hinter derselben, vorgesehen sind, welche die Klappe unterstützen, wobei das vordere Teil einen unterschiedlichen Luftwiderstand aufweist und die Flügel zur horizontalen Stellung hin drehen.

2. Automatischer Vorderkantenklappe nach Anspruch 1, **dadurch gekennzeichnet, dass** die Achse parallel zur Querachse des Flugzeugs oder der Vorderkante des Flügels ausgerichtet ist.

3. Automatische Vorderkantenklappe nach Anspruch 1, **dadurch gekennzeichnet, dass** es sich bei den Ausziehmitteln um Bänder handelt.

4. Automatische Vorderkantenklappe nach Anspruch 1, **dadurch gekennzeichnet, dass** es sich bei den Ausziehmitteln um Federn handelt.

5. Automatische Vorderkantenklappe nach Anspruch 1, **dadurch gekennzeichnet, dass** am gegenüberliegenden Flügel eine zweite Klappe vorgesehen ist.

6. Automatische Vorderkantenklappe nach Anspruch 5, **dadurch gekennzeichnet, dass** ein Kardangelenk vorgesehen ist, das die Achsen der gegenüberliegenden Klappen verbindet.

7. Automatische Vorderkantenklappe nach Anspruch 5, **dadurch gekennzeichnet, dass** jeder Flügel mehrere Klappen aufweist, die durch eine gemeinsame Achse mit entpsrechenden Abstützungen am Rumpf miteinander verbunden sind.

8. Automatische Vorderkantenklappe nach Anspruch 1, **dadurch gekennzeichnet, dass** zusätzliche Anschläge vorgesehen sind, welche die Drehbewegung begrenzen und die Flügel in ihrer äussersten eingeschobenen bzw. ausgezogenen Stellung halten.

9. Automatische Vorderkantenklappe nach Anspruch 1, **dadurch gekennzeichnet, dass** Betätigungsmittel vorgesehen sind, welche die Klappe drehen und in ihrer äussersten eingeschobenen Stellung halten können.

10. Automatische Vorderkantenklappe nach Anspruch 1, **dadurch gekennzeichnet dass** ein Fallhammer gegen Böen angeordnet wird, der starke Schwingungen verhindert.

11. Automatische Vorderkantenklappe nach Anspruch 1, dadruch gekennzeichnet, dass sich die Klappen unter und vor dem Flügel befinden und sich im Anschluss an diesen nach vorn erstrecken.

## Revendications

1. Volet de bord d'attaque automatique qui comprend au moins un volet (2) situé sur la partie supérieure avant de l'aile (1) et faisant partie de cette aile, un axe tournant (4) pour fixer ce volet, au moins un, au fuselage ou à l'aile grâce à des moyens (15) aidant ce flap, au moins un, sur deux parties, une partie de petite dimension devant cet axe et une autre plus grande derrière, sur lequel la partie avant a une résistance à l'air de la marche différente, ces ailettes tournant pour prendre la position horizontale.

2. Volet de bord d'attaque automatique selon la revendication 1, où cet axe est parallèle à l'axe transversal de l'aéronef ou du bord d'attaque de l'aile.

3. Volet de bord d'attaque automatique selon la revendication 1, où les moyens d'extension sont des feuillards.

4. Volet de bord d'attaque automatique selon la revendication 1, où les moyens d'extension sont des ressorts.

5. Volet de bord d'attaque automatique selon la revendication 1, **caractérisé en ce qu'**il y a un deuxième volet disposé sur l'aile opposée.

6. Volet de bord d'attaque automatique selon la revendication 5, **caractérisé en ce qu'**il comprend un joint de cardan qui raccorde les axes de ces volets opposés.

7. Volet de bord d'attaque automatique selon la revendication 5, **caractérisé en ce que** chaque aile possède plusieurs volets reliés entre eux par un axe commun avec les supports d'appui correspondants sur le fuselage.

8. Volet de bord d'attaque automatique selon la revendication 1, **caractérisé en ce qu'**il comprend en plus des butées de limite de rotation qui maintiennent les ailettes en position de rétraction et d'extension maximum.

9. Volet de bord d'attaque automatique selon la revendication 1, **caractérisé en ce qu'**il comprend des moyens de commande qui peuvent faire tourner ce volet en position de rétraction maximum.

10. Volet de bord d'attaque automatique selon la revendication 1, **caractérisé en ce qu'**il comprend un marteau antirafales empêchant de grandes oscillations.

11. Volet de bord d'attaque automatique selon la revendication 1 où les volets sont situés sous, devant et s'étendent vers l'avant dans le prolongement de l'aile.
